# EUROPÄISCHE PATENTSCHRIFT

(11) **EP 2 103 412 B1**
(45) Veröffentlichungstag und Bekanntmachung des Hinweises auf die Patenterteilung: **11.09.2013**
(21) Anmeldenummer: 08004992.7
(22) Anmeldetag: 18.03.2008
(51) Int. Cl.: B29C 49/00, B29C 49/78

(54) **Verfahren zur fortlaufenden Herstellung eines Verbundrohres mit Rohrmuffe und Vorrichtung zur Durchführung des Verfahrens**
Method for continuous manufacture of a connecting rod with rod fitting and device for executing the method
Procédé destiné à la fabrication continue d'un tuyau composite doté d'un manchon tubulaire et dispositif d'exécution du procédé

(43) Veröffentlichungstag der Anmeldung: 23.09.2009
(60) Teilanmeldung: 11190930.5
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred

(56) Entgegenhaltungen:
- EP-A- 0 563 575
- EP-A- 1 612 030
- DE-U1-202007 002 954

## Beschreibung

Die Erfindung betrifft ein Verfahren nach dem Oberbegriff des Anspruches 1.

Aus der EP 1 612 030 (entsprechend US 7,238,317) sind ein derartiges Verfahren, ein Verbundrohr und eine Vorrichtung bekannt. Je größer die Nennweiten der Rohre werden, umso größer werden die Wellenberge und damit auch die relative Vergrößerung der Rohr-Muffe gegenüber dem Innendurchmesser des Verbundrohres. Dies ist darauf zurückzuführen, dass das normale Verbundrohr in vielen Fällen auch als Spitzende des Rohres verwendet wird, dass also ein Verbundrohr mit den Wellenbergen in die Rohr-Muffe eingeführt wird. Die Übergangs-Abschnitte zwischen dem bei der in-line-Herstellung voreilenden Verbundrohr und der Rohr-Muffe einerseits und der Rohr-Muffe und dem nacheilenden Verbundrohr andererseits haben also eine beträchtliche radiale Erstreckung. Insbesondere der auch nach der Durchtrennung des endlosen Rohrstrangs verbleibende Übergangs-Abschnitt zwischen Verbundrohr und Rohr-Muffe soll eine ausgeprägte radiale Erstreckung haben, also bezogen auf die Mittel-Längs-Achse steil nach außen gerichtet sein, damit beim Einführen des Spitzendes in die Rohr-Muffe bis an den Übergangs-Abschnitt heran keine Toträume bzw. keine erheblichen Toträume entstehen, in denen sich Schmutz ablagern kann. Je größer die Nennweiten sind und/oder je größer die Produktionsgeschwindigkeit ist, desto größer ist die Gefahr, dass sich im Bereich des Übergangs-Abschnitts und am Muffen-Anfang und Muffen-Ende der Innen-Schlauch nicht vollflächig an den Außen-Schlauch anlegt. Um ein vollflächiges Anlegen und damit Verschweißen des Innen-Schlauches am Außen-Schlauch im Bereich des Übergangs-Abschnitts zu erreichen, wird der Übergangs-Abschnitt im Bereich zwischen Innen-Schlauch und Außen-Schlauch dadurch in einen benachbarten Wellenberg entlüftet, dass der Außen-Schlauch im Bereich des Übergangs-Abschnitts mit mindestens einem, das benachbarte Wellental durchdringenden, in Richtung der Mittel-Längs-Achse verlaufenden Überström-Kanal versehen wird. Bei dieser vom Ansatz her ausgezeichneten Lösung hat sich gezeigt, dass unter ungünstigen Produktionsverhältnissen der Überström-Kanal nicht immer einen ausreichend großen freien Querschnitt für die angestrebte Entlüftung aufweist.

Der Erfindung liegt daher die Aufgabe zugrunde, ein Verfahren der gattungsgemäßen Art so auszugestalten, dass der Überström-Kanal stets einen ausreichend freien Querschnitt erhält.

Diese Aufgabe wird erfindungsgemäß bei einem Verfahren nach dem Oberbegriff des Anspruches 1 durch die Merkmale im Kennzeichnungsteil des Anspruches 1 gelöst.

Der Kern der Erfindung liegt darin, dass während der Herstellung des normalen mit Wellenbergen versehenen Verbundrohres in an sich bekannter Weise zwischen dem Kalibrierdorn und dem Innen-Schlauch ein leichter Überdruck herrscht, sodass einerseits eine gute Verschweißung zwischen dem Innen-Schlauch und den Wellentälern des Außen-Schlauchs erreicht wird und andererseits die Reibung zwischen Innen-Schlauch und Kalibrierdorn ausgeschaltet wird. Andererseits wird die Ausbildung der Überström-Kanäle dadurch positiv beeinflusst, dass während ihrer Ausformung der Innen-Schlauch von innen mit einem leichten Teil-Vakuum beaufschlagt wird, wodurch der Innen-Schlauch in diesem Bereich über eine kurze Produktionsstrecke am Kalibrierdorn anliegt und dort gekühlt wird. Hierdurch wird der Innen-Schlauch in diesem Bereich durch den direkten Kontakt zum Kalibrierdorn stärker verfestigt als im übrigen Bereich, sodass die Gefahr ausgeschlossen wird, dass die Kunststoffschmelze des Innen-Schlauchs ein oder mehrere Überström-Kanäle wieder teilweise zusetzt, deren freien Durchström-Querschnitt also reduziert. Die Verschweißung des Innen-Schlauches mit dem Wellental der Wellung in diesem Bereich wird hierdurch nicht beeinträchtigt.

Weitere vorteilhafte Ausgestaltungen ergeben sich aus den Unteransprüchen.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine im Wesentlichen aus zwei Extrudern, einer Formmaschine und einer Nachkühlvorrichtung bestehende Anlage zur Herstellung von Verbundrohren mit Rohr-Muffen in Draufsicht in schematischer Darstellung,
- Fig. 2: einen Spritzkopf und das Einlaufende der Formmaschine im Horizontalschnitt,
- Fig. 3: einen vertikalen Teil-Längsschnitt durch die Formmaschine während der Herstellung eines normalen Verbundrohres,
- Fig. 4: den vertikalen Teil-Längsschnitt gemäß Fig. 3 in einer Position kurz vor dem Beginn der Herstellung einer doppellagigen Rohr-Muffe,
- Fig. 5: den vertikalen Teil-Längsschnitt gemäß Fig. 3 und 4 in einer Position während der Herstellung von Überström-Kanälen,
- Fig. 6: den vertikalen Teil-Längsschnitt gemäß Fig. 3 bis 5 in einer Position während der Herstellung eines Übergangs-Abschnitts,
- Fig. 7: den vertikalen Teil-Längsschnitt gemäß Fig. 3 bis 6 in einer Position nach der Ausbildung des Übergangs-Abschnitts und nach dem Beginn der Herstellung der doppellagigen Rohr-Muffe,
- Fig. 8: einen vergrößerten Teil-Ausschnitt gemäß der Linie VIII in Fig. 7,
- Fig. 9: den vertikalen Teil-Längsschnitt entsprechend Fig. 3 bis 7 in einer Position am Ende der Herstellung der Rohr-Muffe vor der Ausbildung von Überström-Kanälen,
- Fig. 10: den vertikalen Teil-Längsschnitt entsprechend den Fig. 3 bis 7 und 9 nach der Ausformung von Überström-Kanälen,
- Fig. 11: den vertikalen Teil-Längsschnitt entsprechend den Fig. 3 bis 7 und 9, 10 während der Herstellung eines normalen Verbundrohres,
- Fig. 12: ein auf der Anlage hergestelltes Verbundrohr mit Rohr-Muffe,
- Fig. 13: einen Querschnitt durch das Verbundrohr gemäß der Schnittlinie XIII-XIII in Fig. 12 und
- Fig. 14: einen Schaltplan für die Drucksteuerung in schematischer Darstellung.

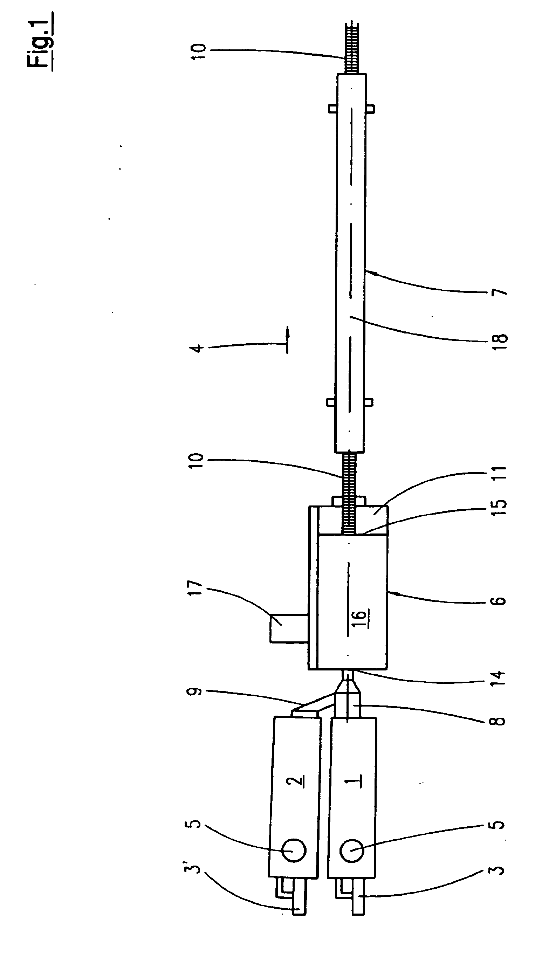

Die in Fig. 1 dargestellte Anlage zur Herstellung von Verbundrohren weist zwei Extruder 1, 2 auf. Diese werden jeweils von einem drehzahlregelbaren Antriebsmotor 3 bzw. 3' angetrieben, der - bezogen auf eine Förderrichtung 4 der gesamten Anlage - stromaufwärts vor den Zuführtrichtern 5 der Extruder 1, 2 vorgesehen ist.

Bezogen auf die Förderrichtung 4 stromabwärts von den Extrudern 1, 2 ist eine Formmaschine 6, ein so genannter Korrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge zerschnitten werden.

Die Formmaschine 6 ist in ihrem Aufbau bekannt und in der Praxis üblich. Sie ist beispielsweise in der EP 0 563 575 B1 (entsprechend US-PS 5,320,797) beschrieben, worauf ausdrücklich verwiesen wird. Sie weist im Wesentlichen einen Maschinentisch 11 auf, auf dem Halbkokillen 12, 12' angeordnet sind, die jeweils zu zwei so genannten Ketten 13, 13' miteinander verbunden sind. Diese Ketten 13, 13' werden am - bezogen auf die Förderrichtung 4 - stromaufwärtigen Einlaufende 14 und an ihrem stromabwärtigen Auslaufende 15 über nicht dargestellte Umlenkrollen geführt. Sie werden bei dem Umlauf in Förderrichtung 4 derart geführt, dass jeweils zwei Halbkokillen 12, 12' zu einem Kokillen-Paar vereinigt werden, wobei wiederum in Förderrichtung 4 hintereinanderfolgende Kokillen-Paare dicht an dicht liegen. Der Antrieb der auf einer Formstrecke 16 jeweils zu Kokillen-Paaren zusammengeführten Halbkokillen 12, 12' erfolgt mittels eines Antriebsmotors 17.

Der Quer-Spritzkopf 8 weist zwei konzentrisch zu einer gemeinsamen Mittel-Längs-Achse 18 angeordnete Schmelzekanäle, nämlich einen inneren Schmelzekanal 19 und einen äußeren Schmelzekanal 20, auf, die - bezogen auf die Förderrichtung 4 - stromabwärts in einer Innen-Düse 21 bzw. einer Außen-Düse 22 enden. Der innere Schmelzekanal 19 ist an einen Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist. Zwischen der Innen-Düse 21 und der Außen-Düse 22 mündet aus dem Spritzkopf 8 ein Gaskanal 24, der über ein Ventil an eine Druckgasquelle zum Einblasen von so genannter Stützluft anschließbar ist.

Am - bezogen auf die Förderrichtung 4 - stromabwärtigen Ende des Spritzkopfes 8 ist an diesem ein Kalibrierdorn 25 angebracht, der ebenfalls konzentrisch zur Achse 18 verläuft. Er weist Kühlkanäle 26 auf, durch die Kühlwasser geführt wird, das über eine Kühlwasser-Vorlaufleitung 27 zugeführt und eine Kühlwasser-Rücklaufleitung 28 abgeführt wird. Weiterhin ist eine Luftleitung 29 vorgesehen, die an einen als zusätzlicher Gaskanal dienenden Gasspalt 30 angeschlossen ist, der sich - bezogen auf die Förderrichtung 4 - unmittelbar stromabwärts der Innen-Düse 21 zwischen dem Spritzkopf 8 und dem Kalibrierdorn 25 befindet. Die Luftleitung 29 ist über ein Ventil einerseits an eine Druckgasquelle zum Einblasen von Stützluft und andererseits an ein Teil-Vakuum anschließbar. Die Leitungen 27, 28, 29 sind durch einen konzentrisch zur Achse 18 im Spritzkopf 8 ausgebildeten, etwa rohrförmigen Versorgungskanal 31 geführt.

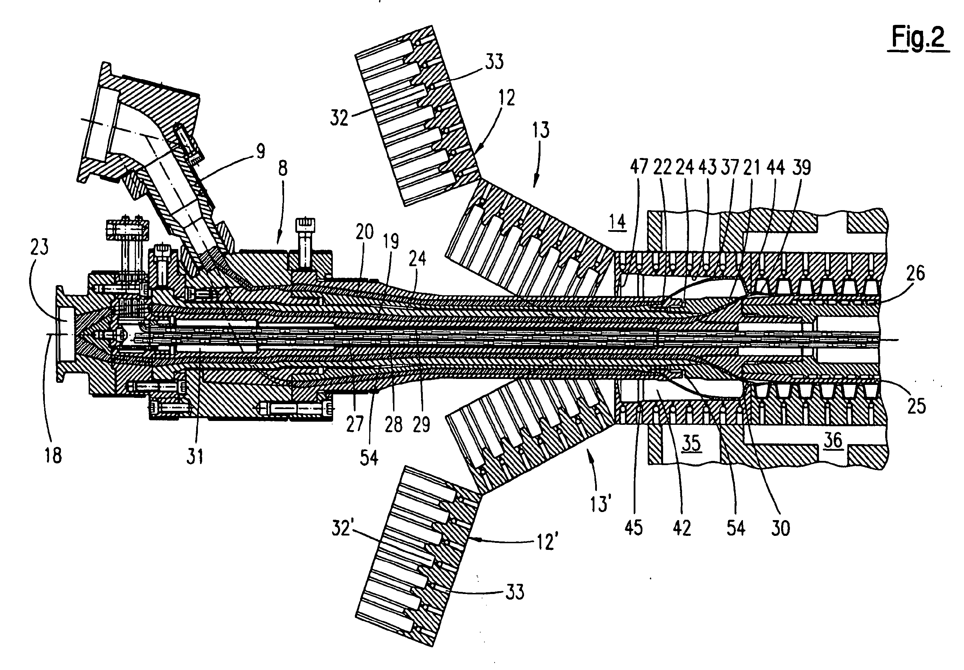

Die Halbkokillen 12, 12' weisen ringförmige Formausnehmungen 32, 32' auf, die in regelmäßigen Abständen hintereinander angeordnet sind und die jeweils an Teil-Vakuum-Kanäle 33 angeschlossen sind. Beim Einlauf der Halbkokillen 12, 12' in die Formstrecke 16 gelangen die Teil-Vakuum-Kanäle 33 - wie Fig. 2 entnehmbar ist - an Teil-Vakuum-Versorgungsquellen 35 bzw. 36, sodass die Formausnehmungen 32, 32' mit Teil-Vakuum beaufschlagt werden.

Die vom Extruder 2 durch den Spritzkanal 9 dem Spritzkopf 8 zugeführte Kunststoff-Schmelze strömt durch den äußeren Schmelzekanal 20 zur Außen-Düse 22 und wird dort unter Formung eines Außen-Schlauchs 37 extrudiert. Aufgrund des Teil-Vakuums legt sich dieser Schlauch 37 unter Formung eines mit ringförmigen Wellenbergen 38 versehenen Schlauchs in die Formausnehmungen 32, 32'. Aus dem Extruder 1 wird durch den Spritzkanal 23 dem Quer-Spritzkopf 8 Kunststoff-Schmelze zugeführt und strömt durch den inneren Schmelzekanal 19 zur Innen-Düse 21 und tritt dort als Innen-Schlauch 39 aus, der auf den Kalibrier-Dorn 25 gelangt. Dieser erweitert sich von der Innen-Düse 21 in Förderrichtung 4 leicht nach außen, bis der Innen-Schlauch 39 gegen die Wellentäler 40 des Außen-Schlauchs 37 gelangt und hier mit diesem verschweißt wird. Der Innen-Schlauch 39 und der Außen-Schlauch 37 bilden nach Abkühlung unter Erstarrung das Verbundrohr 10.

Wie insbesondere aus den Figuren 2 bis 7 und 9 bis 11 ersichtlich ist, sind die Halbkokillen 12, 12' so ausgebildet, dass jeweils in vorgegebenen Abständen innerhalb des endlos hergestellten Verbundrohres 10 Rohr-Muffen 41 ausgebildet werden. Hierzu ist in einem Paar von Halbkokillen 12, 12' eine Muffen-Ausnehmung 42 ausgebildet, die also eine im Wesentlichen glatte, zylindrische Wand 43 aufweist. Zwischen der Wand 43 der Muffen-Ausnehmung 42 und der in Förderrichtung 4 voreilenden Formausnehmung 32 ist eine Übergangs-Fläche 44 ausgebildet. An das - bezogen auf die Förderrichtung 4 - nacheilende Ende der Wand 43 der Muffen-Ausnehmung 42 schließen sich Umfangsrillen 34 zur Versteifung der Rohr-Muffe 41 und ein kegelstumpfförmiger Formabschnitt 45 an, in dem ein sich nach außen erweiterndes Einführende 46 der Muffe 41 ausgeformt wird. Daran schließt sich wiederum eine Übergangs-Fläche 47 an, die zur nächsten - in Förderrichtung 4 nacheilenden - Formausnehmung 32 führt.

Soweit die Vorrichtung bis hierher beschrieben ist, ist sie im Wesentlichen aus EP 0 995 579 A2 (entsprechend US 6,458,311) bekannt, worauf ausdrücklich verwiesen wird.

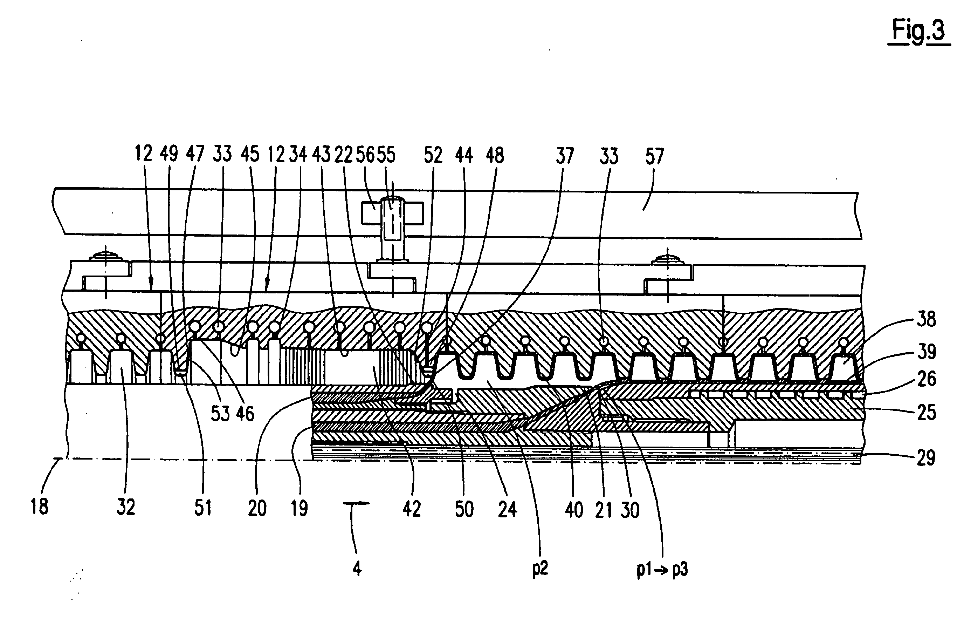

Wie aus Fig. 3 bis 11 hervorgeht, sind an der - in Förderrichtung 4 voreilenden - Übergangs-Fläche 44 und an der - in Förderrichtung 4 nacheilenden - Übergangs-Fläche 47 im Bereich des zu erzeugenden Wellentals 40 an dem die jeweilige Übergangs-Fläche 44 bzw. 47 formenden Ringsteg 48 bzw. 49 der Halbkokille 12, 12' in Richtung der Achse 18 verlaufende schlitzförmige Ausnehmungen 50, 51 ausgebildet. Diese Ausnehmungen 50, 51 verbinden also die jeweilige Übergangs-Fläche 44 bzw. 47 mit dem nächstbenachbarten ringförmigen Wellenberg 38. Die Ausnehmungen 50, 51 jedes Ringstegs 48, 49 sind mittels sich über den Umfang der jeweiligen Übergangs-Fläche 44 bzw. 47 erstreckenden und in letzteren ausgebildeten Verbindungsnuten 52, 53 miteinander verbunden.

Wie aus den Fig. 3 bis 7 und 9 bis 11 hervorgeht, erstreckt sich die die Muffen-Ausnehmung 42 aufnehmende Halbkokille 12 über eine solche Länge, dass die Ringstege 48, 49 vollständig in ihr enthalten sind. Die Trennung benachbarter Halbkokillen 12 geht also abweichend von der insoweit nur schematischen Darstellung in Fig. 2 nicht durch den Ringsteg 48 bzw. 49. Dies hat fertigungstechnische Vorteile. Wenn die Muffen-Ausnehmung 42 so lang ist, dass sie sich über mehr als eine Halbkokille 12 erstreckt, dann gilt dies entsprechend für diese Halbkokillen 12.

Benachbart zum Gaskanal 24 ist ein Entlüftungskanal 54 vorgesehen, der entweder mit entsprechender Drosselung ständig mit der Atmosphäre verbunden ist oder über ein entsprechendes Ventil zur Atmosphäre geöffnet werden kann.

In einer räumlich festen Zuordnung zu der Muffen-Ausnehmung 42 ist ein stabförmiges Schaltglied 55 mit der entsprechenden Halbkokille 12 verbunden, das einen Schalter 56 betätigt, mittels dessen die Drehzahl und damit die Extrudiergeschwindigkeit der Extruder 1, 2 verändert wird, und mittels dessen der Gaskanal 24 bzw. der Gasspalt 30 versorgt werden. Hierzu ist an der Formmaschine 6 ein Haltearm 57 angebracht, der sich oberhalb der Halbkokillen 12, 12' in Förderrichtung 4 erstreckt. An diesem Haltearm 57 ist der von dem Schaltglied 55 zu betätigende Schalter 56 angebracht. Dieser Schalter 56 wird entsprechend der Darstellung in Fig. 3 betätigt. Eine mögliche Veränderung der Drehzahl des Extruders 2, der die Kunststoff-Schmelze zur Herstellung des Außen-Schlauches 37 liefert, die Ansteuerung der so genannten Stützluft, die aus dem Gaskanal 24 strömt, die Ansteuerung des Gasspaltes 30 am Kalibrierdorn 25 und schließlich die Änderung der Drehzahl und damit der Extrudiergeschwindigkeit des Extruders 1, der die Kunststoff-Schmelze zur Erzeugung des Innen-Schlauches 39 liefert, erfolgen über die Software einer Steuerung, für die der Schalter 56 bei Betätigung ein Referenzsignal liefert.

Während der Produktion des normalen gewellten Verbundrohres 10 in der in Fig. 3 rechts dargestellten Form wird der Außen-Schlauch 37 aufgrund des Teil-Vakuums in die Formausnehmungen 32 gezogen und liegt an diesen an. Hierbei wird ein geringer Überdruck p 1 von 0,05 bis 0,4 bar über Atmosphärendruck pa auf den Gasspalt 30 gegeben. Gleichzeitig wird auf den Gaskanal 24 ein ebenfalls geringer Überdruck p2 von 0,1 bis 0,4 bar, ebenfalls gegenüber Atmosphäre gemessen, gegeben. Durch den geringen Überdruck p1 innerhalb des Innen-Schlauches 39 wird verhindert, dass der Innen-Schlauch 39 an dem Kalibrierdorn 25 festklebt, bevor er mit dem Außen-Schlauch 37 verschweißt wird. In Fig. 3 ist erkennbar, dass der Innenschlauch 39 im Bereich des Gasspalts 30 vom Kalibrierdorn leicht abgehoben ist. Durch den etwas höheren Überdruck zwischen Außen-Schlauch 37 und Innen-Schlauch 39 wird sichergestellt, dass beim Abkühlen der an den Wellentälern 40 miteinander verschweißten Schläuche 37, 39 zum gewellten Verbundrohr 10 der Innen-Schlauch 39 nicht radial nach außen in den Wellenberg 38 hinein ausgewölbt wird. Beim Abkühlen der Schläuche 37, 39 stellt sich zwischen diesen Atmosphärendruck pa ein.

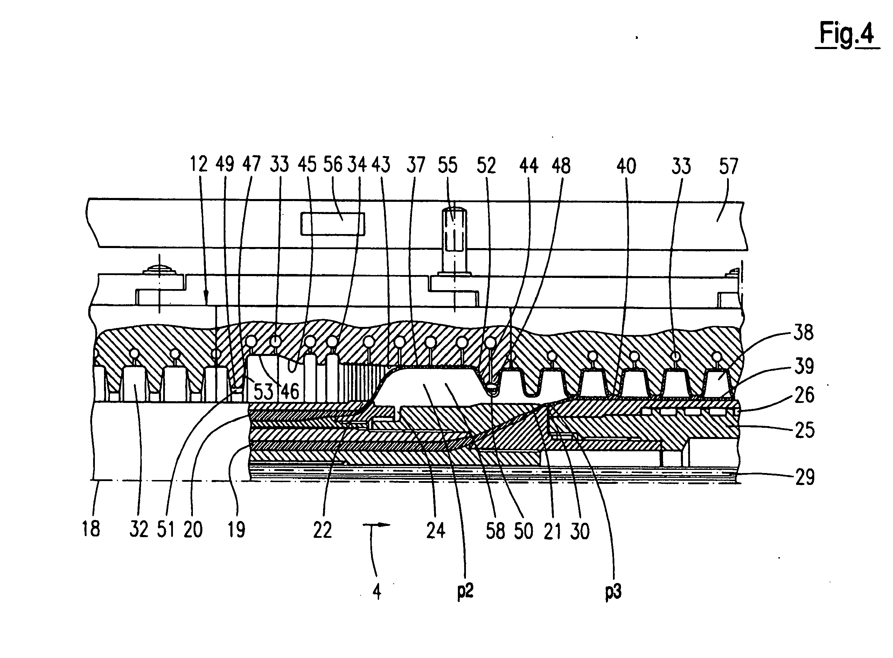

Wenn in dem in Fig. 3 dargestellten Augenblick die Übergangs-Fläche 44 in den Bereich der Außen-Düse 22 kommt, gelangt das Schaltglied 55 zum Schalter 56, durch dessen Betätigung der Überdruck p1 vom Gasspalt 30 genommen wird. Der im Gasspalt 30 anliegende Überdruck p1 wird durch ein Teil-Vakuum p3 ersetzt, sodass - wie Fig. 4 entnehmbar ist - der Innen-Schlauch 39 benachbart zur Innen-Düse 21 fest am Kalibrierdorn 25 anliegt. Hierdurch wird der Innen-Schlauch 39 stärker als zuvor abgekühlt und damit verfestigt. Gleichzeitig kann die Drehzahl des Extruders 2 verändert werden, so dass aus der Außen-Düse 22 eine kleinere oder größere Schmelzemenge pro Zeiteinheit austritt mit der Folge, dass die Wanddicke des Außen-Schlauchs 37 vergrößert wird. In jedem Fall wird die Drehzahl des Extruders 1 zur Erzeugung des Innen-Schlauchs 39 kurz vor Beginn der Erzeugung des Übergangs-Abschnitts 61 oder unmittelbar zu Beginn der Erzeugung des Übergangs-Abschnitts 61 erhöht, so dass insbesondere für die Erzeugung des Übergangs-Abschnitts die pro Zeiteinheit für den Innen-Schlauch 39 zugeführte Schmelzemenge erhöht wird.

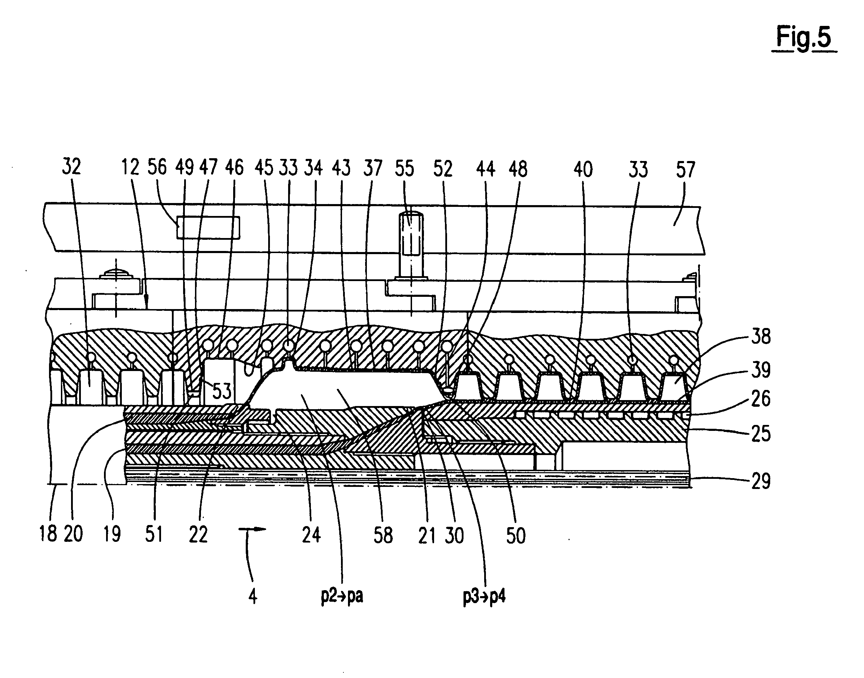

Wenn entsprechend Fig. 5 die Übergangs-Fläche 44 über den Gasspalt 30 hinweggefahren ist, wird der Überdruck p2 im Zwischenraum 58 abgeschaltet und entlüftet, sodass Atmosphärendruck pa auftritt. Da der Außen-Schlauch 37 an seiner Außenseite mit Teil-Vakuum beaufschlagt wird und im Zwischenraum 58 zwischen dem Außen-Schlauch 37 und dem Innen-Schlauch 39 Atmosphärendruck pa herrscht, legt sich der Außen-Schlauch 37 an die Wand 43 der Muffen-Ausnehmung 42 an.

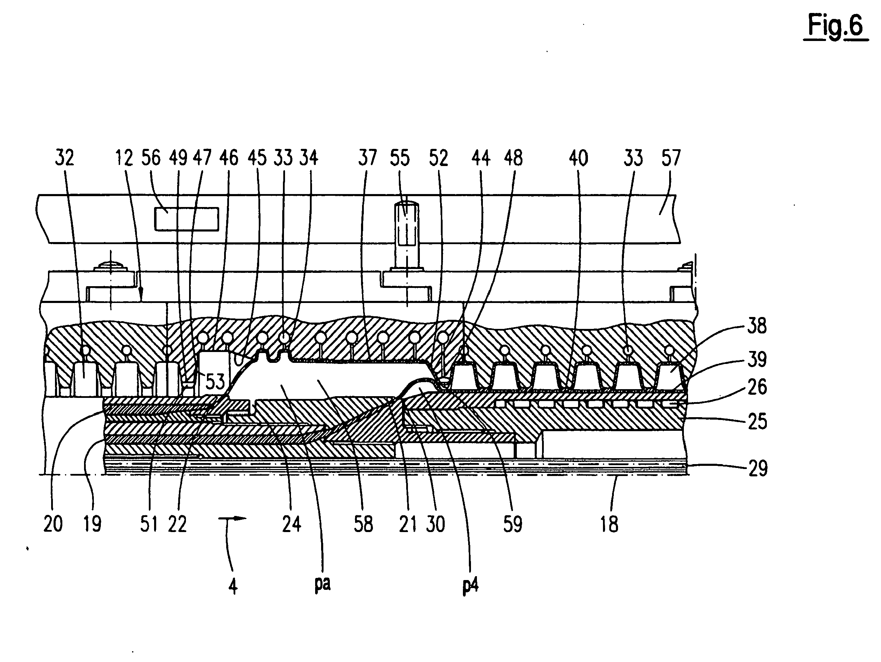

Wenn - etwa entsprechend der Darstellung in Fig. 5 und 6 - die Übergangs-Fläche 44 die Innen-Düse 21 geringfügig überfahren hat, wird der Unterdruck p3 der am Gasspalt 30 austretenden Luft z. B. auf einen Überdruck p4 von ca. 0,1 bis 0,45 bar umgeschaltet. Da der Zwischenraum 58 zwischen Innen-Schlauch 39 und Außen-Schlauch 37 im Bereich der Muffen-Ausnehmung 42 entlüftet wird, wird der Innen-Schlauch 39 nach außen gegen den Außen-Schlauch 37 gedrückt.

Wie Fig. 4 bis 8 entnehmbar ist, legt sich der Außen-Schlauch 37 gegen den Ringsteg 48 und die Übergangs-Fläche 44, wobei gleichzeitig im Bereich der schlitzförmigen Ausnehmungen 50 ein in den benachbarten Wellenberg 38 führender Überström-Kanal 59 geformt wird. An der Übergangs-Fläche 44 legt sich der Außen-Schlauch 37 auch in die Verbindungsnuten 52, wodurch Verbindungs-Kanäle 60 in dem zu formenden Außen-Rohr 37' gebildet werden. Der Innen-Schlauch 39 wird aufgrund des in ihm herrschenden Drucks zwar gegen den Außen-Schlauch 37 gedrückt, aber nicht in die Überström-Kanäle 59 bzw. die Verbindungs-Kanäle 60 eingedrückt bzw. eingeformt, sodass diese Kanäle 59, 60 zwischen dem Außen-Schlauch 37 und dem Innen-Schlauch 39 erhalten bleiben. Die in diesem Bereich befindliche Luft kann also in den in Förderrichtung voreilenden Wellenberg 38 abströmen. In dem Übergangs-Abschnitt 61 zwischen dem normalen Verbundrohr 10 und der in-line angeformten Rohr-Muffe 41 werden also der Außen-Schlauch 37 und der Innen-Schlauch 39 fast vollflächig miteinander verschweißt. Lediglich im Bereich der Überström-Kanäle 59 und der Verbindungs-Kanäle 60 ist diese Verschweißung nicht gegeben. Diese Ausgestaltung ermöglicht es, den Übergangs-Abschnitt 61 - bezogen auf die Förderrichtung 4 - stark radial, also verhältnismäßig steil ansteigend, auszubilden. Der Innen-Schlauch 39 wird nicht in die Überström-Kanäle 59 hineingedrückt, weil der Teil des Innen-Schlauchs 39, der die Überström-Kanäle 59 und die Verbindungs-Kanäle 60 begrenzt, zuvor auf dem Kalibrierdorn stärker gekühlt und dadurch verfestigt worden ist.

Während der Ausformung der Rohr-Muffe 41 kann der auf den Innen-Schlauch 39 über den Gasspalt 30 gegebene Überdruck p4 variieren. Dies hängt von dem Rohrdurchmesser, der Schmelzelastizität des eingesetzten Kunststoffs, der Wanddicke des Innen-Schlauchs und weiteren Parametern ab.

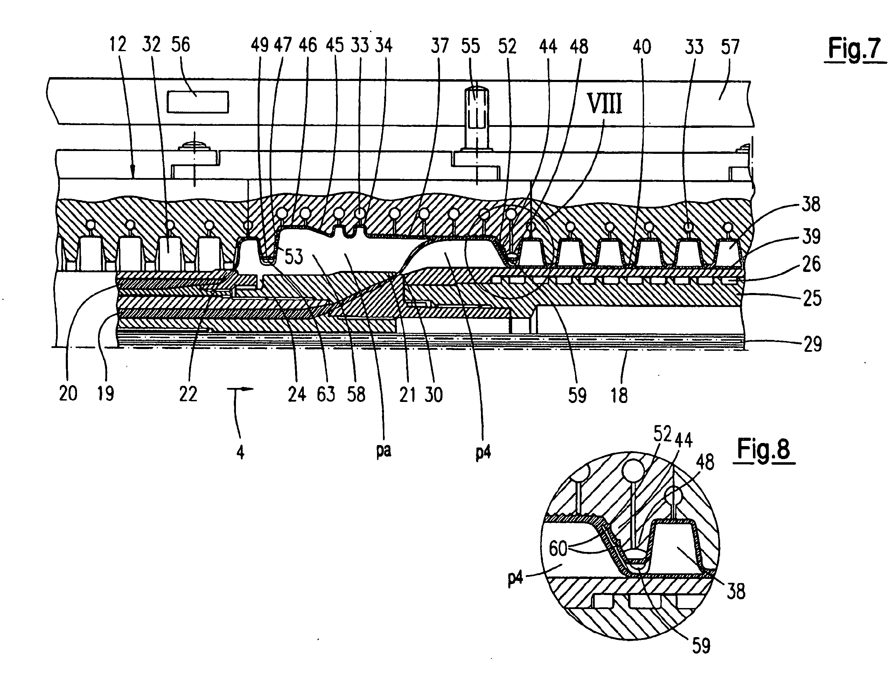

Wenn - entsprechend Fig. 7 - die Übergangs-Fläche 47 der Muffen-Ausnehmung 42 die Außendüse 22 überfährt, legt sich der Außen-Schlauch 37 gegen die Übergangs-Fläche 47 und in die in diesem ausgebildeten Verbindungsnuten 53, wodurch Verbindungs-Kanäle 62 im Außen-Schlauch 37 ausgebildet werden. Anschließend legt sich der Außen-Schlauch gegen den Ringsteg 49 und wird in die schlitzartigen Ausnehmungen 51 unter Bildung von Überströmkanälen 63 ausgeformt.

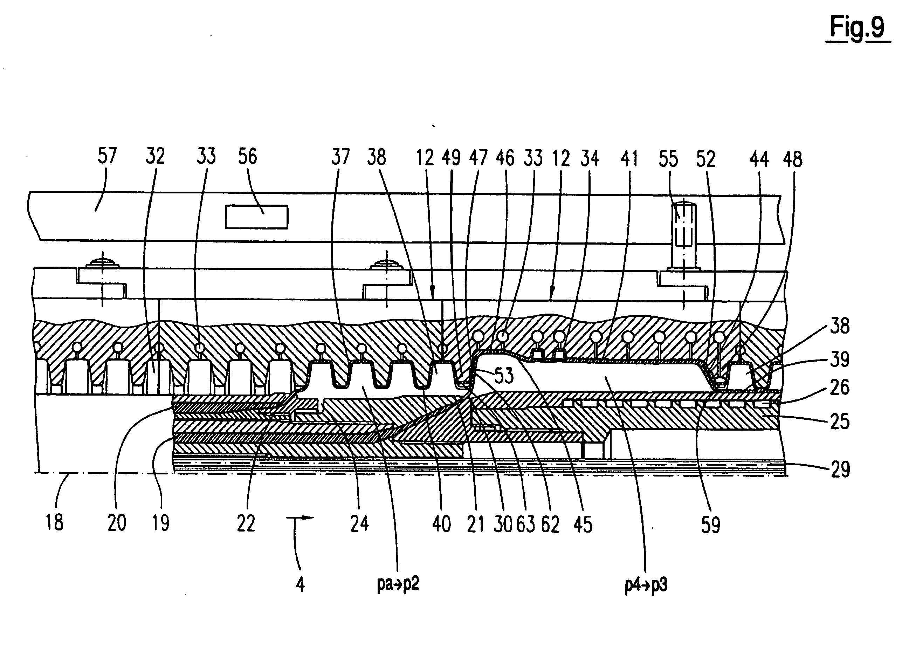

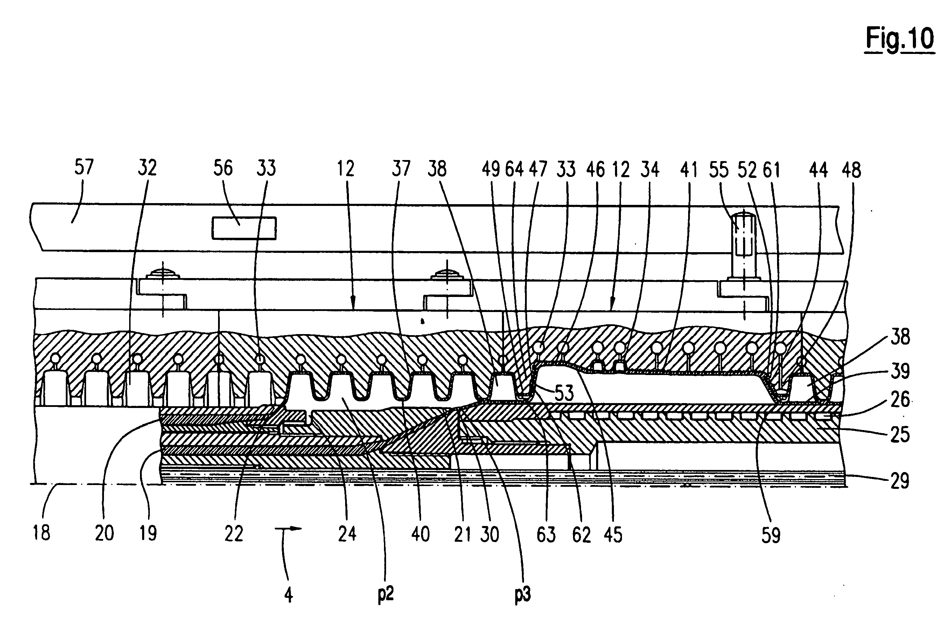

Wenn - gemäß Fig. 9 und 10 - die Übergangs-Fläche 47 die Innen-Düse 21 erreicht, dann wird einerseits der Überdruck p4 am Gasspalt 30 wieder auf Unterdruck p3 umgeschaltet und der Gaskanal 24 mit Stützluft mit dem Druck p2 beaufschlagt. Auch hier wird also der Innen-Schlauch 39 über eine kurze Fertigungsstrecke mittels Teil-Vakuum an den Kühldorn gezogen, sodass er abgekühlt und verfestigt wird. Wie bereits geschildert, legt sich der Innen-Schlauch 39 glatt gegen den Außen-Schlauch 37, wird aber nicht in die Verbindungs-Kanäle 62 und die Überström-Kanäle 63 hineingedrückt. Hierdurch wird die im Übergangs-Abschnitt 64 zwischen der Rohr-Muffe 41 und einem - bezogen auf die Förderrichtung 4 - nacheilenden normalen Verbundrohr 10 befindliche Luft in den nachfolgenden Wellenberg 38 abgeleitet.

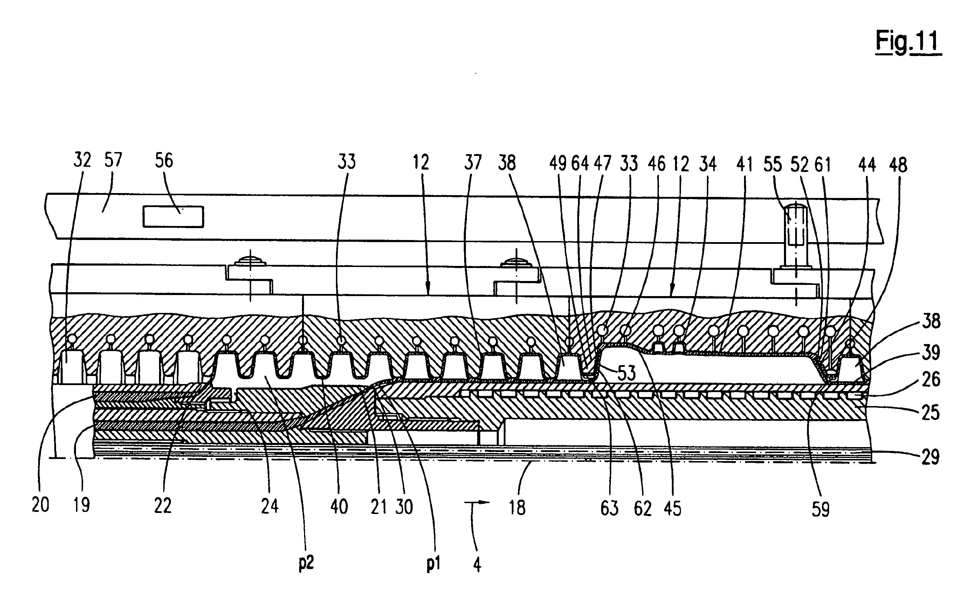

Eine kurze Produktionsstrecke später - etwa entsprechend Fig. 11 - wird der Unterdruck p3 am Gasspalt 30 wieder durch den Überdruck p1 ersetzt, sodass die verfahrenstechnischen Bedingungen wieder auf die Verhältnisse zurückgesetzt sind, die bei der Produktion des normalen Verbundrohres 10 bestehen und oben geschildert worden sind.

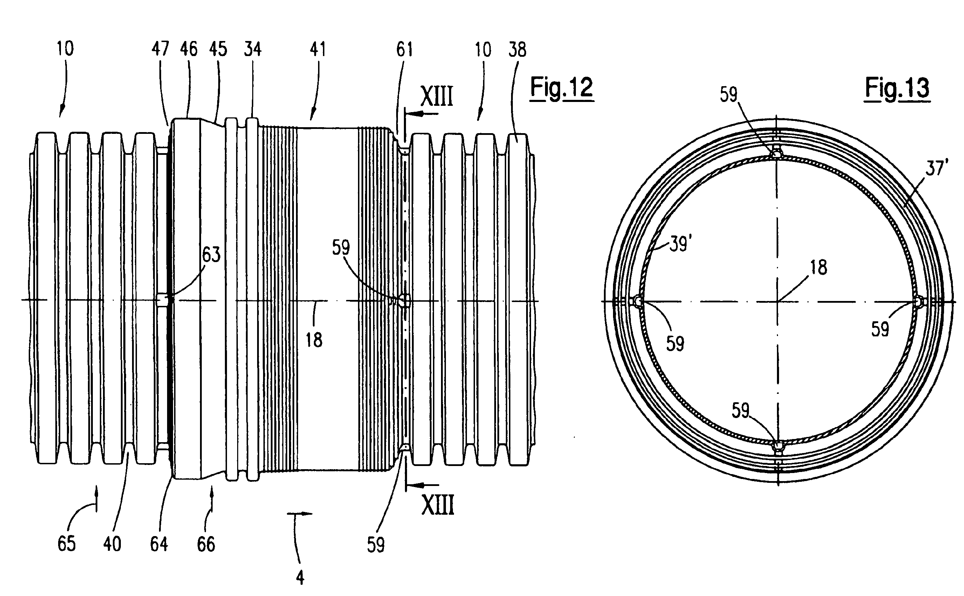

Das insbesondere in Fig. 12 und 13 dargestellte in-line endlos hergestellte Verbundrohr 10 wird im Bereich der in Förderrichtung 4 nacheilenden Übergangs-Fläche 47 durchtrennt, und zwar mit zwei Schnitten 65, 66, von denen der in Förderrichtung 4 nacheilende Schnitt 65 durch ein Wellental 40 hinter dem Übergangs-Abschnitt 64 gerührt wird, während der in Förderrichtung 4 voreilende Schnitt 66 entlang dem Einführende 46 der Muffe 41 geführt wird.

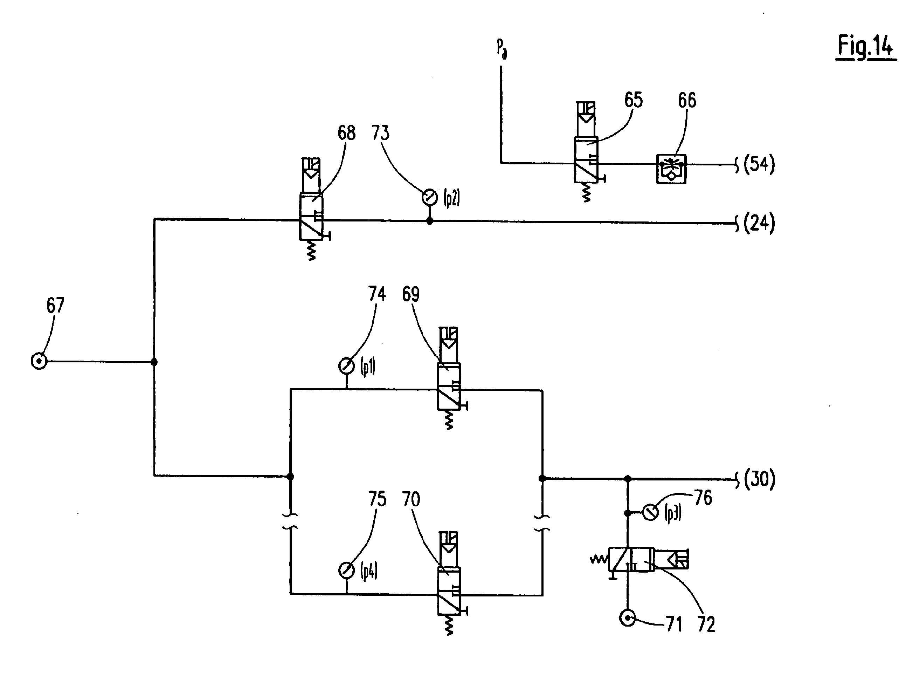

Die vorerwähnten Drucksteuerungen gehen im Einzelnen aus Fig. 14 hervor. Der Entlüftungskanal 54 ist über ein Ventil 65 mit der Atmosphäre mit dem Druck pa verbindbar. Alternativ kann das Ventil 65 entfallen und anstelle dessen eine Drossel 66 in den Entlüftungskanal 54 geschaltet sein, die auch durch einen entsprechend engen Querschnitt des Entlüftungskanals 54 gebildet sein kann. Hierdurch wird sichergestellt, dass während der Beaufschlagung des Zwischenraums 58 zwischen dem Außen-Schlauch 37 und dem Innen-Schlauch 39 mit dem Überdruck p2 in dem Zwischenraum 58 tatsächlich der Druck p2 aufrechterhalten wird.

Auf den Gaskanal 24 wird der Druck p2 von einer gemeinsamen Druckluft-Quelle 67 über ein Ventil 68 gegeben.

Der Gasspalt 30 wird ebenfalls von der Druckluft-Quelle 67 über ein Ventil 69 mit dem Druck p1 beaufschlagt. Parallel zum Ventil 69 ist ein Ventil 70 vorgesehen, über das der Gasspalt 30 mit dem Druck p4 beaufschlagt wird, wobei naturgemäß nur das Ventil 69 oder das Ventil 70 geöffnet sein können. Weiterhin ist auf den Gasspalt 30 eine Teil-Vakuum-Quelle 71 über ein Ventil 72 angeschlossen, mittels dessen das Teil-Vakuum p3 auf den Gasspalt 30 gegeben wird, wie es oben geschildert wurde. Den Ventilen 68, 69, 70, 72 sind Manometer 73, 74, 75, 76 zugeordnet.

Anstelle von zwei Extrudern 1, 2 und einem Quer-Spritzkopf 8 kann auch ein einziger Extruder eingesetzt werden und ein Spritzkopf, wie er beispielsweise aus der EP 0 509 216 B (entsprechend US-Patent 5,346,384) und der EP 0 834 386 B (entsprechend US-Patent 6,045,347) bekannt ist, worauf verwiesen wird. Insbesondere bei einer solchen Ausgestaltung kann alternativ zur Drehzahländerung des Extruders auch die Geschwindigkeit der Ketten 13, 13' aus Halbkokillen 12, 12' verändert werden, wobei zur Vergrößerung der Wanddicke eine Reduktion der Geschwindigkeit der Halbkokillen 12, 12' auf der Formstrecke 16 erfolgt.

## Patentansprüche

1. Verfahren zur fortlaufenden Herstellung eines in einer Förderrichtung (4) aus einem glatten Innen-Rohr (39') und einem mit diesem verschweißten, mit Wellenbergen (38) versehenen Außen-Rohr (37') bestehenden Verbundrohres (10) mit einer Rohr-Muffe (41) und einer Mittel-Längs-Achse (18) mit folgenden Verfahrensschritten:
- es wird konzentrisch zur Mittel-Längs-Achse (18) ein Außen-Schlauch (37) extrudiert;
- der Außen-Schlauch (37) wird durch von außen aufgebrachtes Teil-Vakuum mit einer Wellung mit Wellenbergen (38) und Wellentälern (40) versehen;
- es wird ein Innen-Schlauch (39) konzentrisch zur Mittel-Längs-Achse (18) in den Außen-Schlauch (37) extrudiert;
- der Innen-Schlauch (39) wird über einen Kalibrierdorn (25) geführt und mit den Wellentälern (40) des Außen-Schlauches (37) verschweißt;
- der Außen-Schlauch (37) wird in vorgegebenen Abständen unter Aufbringung des Teil-Vakuums von außen zur Erzeugung einer Rohr-Muffe (41) aufgeweitet,
- der Innen-Schlauch (39) wird von innen mit Gas mit einem Druck p4 über Atmosphärendruck pa beaufschlagt und zur Fertigstellung der Rohr-Muffe (41) unter Aufweitung vollflächig gegen den aufgeweiteten Bereich des Außen-Schlauches (37) gedrückt, und
- zwischen der Rohr-Muffe (41) und einem in Förderrichtung (4) voreilenden benachbarten Wellental (40) wird ein aus dem Innen-Schlauch (39) und dem Außen-Schlauch (37) geformter - bezogen auf die Mittel-Längs-Achse (18) - nach außen gerichteter Übergangs-Abschnitt (61) ausgebildet,
- wobei der Übergangs-Abschnitt (61) im Bereich zwischen Innen-Schlauch (39) und Außen-Schlauch (37) dadurch in einen benachbarten Wellenberg (38) entlüftet wird, dass der Außen-Schlauch (37) im Bereich des Übergangs-Abschnitts (61) mit mindestens einem, das benachbarte Wellental (40) durchdringenden, in Richtung der Mittel-Längs-Achse (18) verlaufenden Überström-Kanal (59) versehen wird,
**dadurch gekennzeichnet,**
**dass** vor dem Ausbilden des Überström-Kanals (59) zwischen dem Kalibrierdorn (25) und dem Innen-Schlauch (39) ein Überdruck p1 gegenüber Atmosphärendruck pa herrscht und
**dass** während des Ausbildens des Überström-Kanals (59) zwischen dem Kalibrierdorn (25) und dem Innen-Schlauch (39) ein Unterdruck p3 gegenüber Atmosphärendruck pa herrscht.

2. Verfahren nach Anspruch 1, **dadurch gekennzeichnet, dass** nach dem Ausbilden des Überström-Kanals (59) im Innen-Schlauch (39) ein Überdruck p4 gegenüber Atmosphärendruck pa und im Zwischenraum (58) zwischen Außen-Schlauch (37) und Innen-Schlauch (39) Atmosphärendruck pa herrscht.

3. Verfahren nach Anspruch 1 oder 2, **dadurch gekennzeichnet, dass** bei Erzeugung des Übergangs-Abschnitts (61) die pro Zeiteinheit für den Innen-Schlauch (39) zugeführte Schmelzemenge erhöht wird.

## Claims

1. Method of continuously producing a compound pipe (10) comprising a smooth internal pipe (39') and an external pipe (37') that is welded together with the internal pipe (39') and provided with hollow elevations (38), a pipe socket (41), and a central longitudinal axis (18), the method comprising the following steps:
- an external tube (37) is extruded concentrically with the central longitudinal axis (18) in a conveying direction (4);
- the external tube (37) is provided with corrugations comprising hollow elevations (38) and troughs (40) by partial vacuum applied from outside;
- an internal tube (39) is extruded into the external tube (37) concentrically with the central longitudinal axis (18);
- the internal tube (39) is passed across a calibrating mandrel (25) and welded together with the troughs (40) of the external tube (37);
- the external tube (37) is expanded at given distances to form an expanded area by applying the partial vacuum from outside so as to produce a pipe socket (41);
- a gas at a pressure p4 above atmospheric pressure is applied to the inside of the internal tube (39) and the internal tube (39) is pressed full face against the expanded area of the external tube (37) so as to finish the pipe socket (41); and
- a transition portion (61) is formed between the pipe socket (41) and an adjacent trough (40) which leads in the conveying direction (4), the transition portion (61) being comprised of the internal tube (39) and the external tube (37) and directed outwardly in relation to the central longitudinal axis (18);
- wherein the transition portion (61), in an area between the internal tube (39) and the external tube (37), is vented into an adjacent hollow elevation (38) by providing the external tube (37), in the area of the transition portion (61), with at least one overflow passage (59) that passes through the adjacent trough (40) and extends in the direction of the central longitudinal axis (18),
**characterized in**
**that** prior to forming the overflow passage (59), there is an overpressure p1 relative to atmospheric pressure pa between the calibrating mandrel (25) and the internal tube (39), and
**that** while the overflow passage (59) is formed, there is a partial vacuum p3 relative to atmospheric pressure pa between the calibrating mandrel (25) and the internal tube (39).

2. Method according to claim 1, **characterized in that** after forming the overflow passage (59), there is an overpressure p4 relative to atmospheric pressure pa in the internal tube (39) while in the clearance (58) between the external tube (37) and the internal tube (39), there is atmospheric pressure pa.

3. Method according to claim 1 or 2, **characterized in that** when the transition portion (61) is formed, the amount of melt, which is supplied per unit time to form the internal tube (39), is increased.

## Revendications

1. Procédé destiné à la fabrication continue d'un tuyau composite (10), dans une direction de transport (4), constitué d'un tuyau interne lisse (39') et d'un tuyau externe (37'), qui lui est soudé, muni de crêtes de plis (38), comprenant un manchon tubulaire (41) et un axe longitudinal central (18), comprenant les étapes de procédé suivantes :
- on extrude un tuyau externe (37) de manière concentrique par rapport à l'axe longitudinal central (18) ;
- le tuyau externe (37) est muni d'un plissage, avec des crêtes de plis (38) et des creux de plis (40), par l'intermédiaire d'un vide partiel appliqué par l'extérieur ;
- on extrude un tuyau interne (39) de manière concentrique par rapport à l'axe longitudinal central (18), dans le tuyau externe (37) ;
- le tuyau interne (39) est passé sur un mandrin de calibrage (25) et soudé avec les creux des plis (40) du tuyau externe (37) ;
- le tuyau externe (37) est élargi à des espacements prédéterminés par l'intermédiaire d'un apport de vide partiel appliqué de l'extérieur pour la réalisation d'un manchon tubulaire (41),
- le tuyau interne (39) est alimenté par l'intérieur avec un gaz possédant une pression p4 supérieure à la pression atmosphérique pa et comprimé, en élargissant sur toute la surface, contre la zone élargie du tuyau externe (37) pour la finition du manchon tubulaire (41), et
- une section de transition (61), orientée vers l'extérieur, formée par le tuyau interne (39) et le tuyau externe (37), par rapport à l'axe longitudinal central (18), est établie entre le manchon tubulaire (41) et un creux de plis (40) voisin, avancé, dans la direction de transport (4),
- la section de transition (61) étant mise à l'air dans la zone entre le tuyau interne (39) et le tuyau externe (37) par l'intermédiaire d'une crête de plis (38) voisine, de sorte que le tuyau externe (37) se trouve muni d'au moins un canal de trop-plein (59) s'étendant en direction de l'axe longitudinal central (18), traversant le creux de plis (40) voisin,
**caractérisé en ce**
**qu'**avant la formation du canal de trop-plein (39), il y a une surpression p1 par rapport à la pression atmosphérique pa entre le mandrin de calibrage (25) et le tuyau interne (39), et
**que**, pendant la formation du canal de trop-plein (59), il y a une dépression p3 par rapport à la pression atmosphérique pa entre le mandrin de calibrage (25) et le tuyau interne (39).

2. Procédé selon la revendication 1 **caractérisé en ce**
**qu'**après la formation du canal de trop-plein (59), il y a une surpression p4 par rapport à la pression atmosphérique pa dans le tuyau interne (39) et que la pression atmosphérique pa règne dans l'espace intermédiaire (58) entre le tuyau externe (37) et le tuyau interne (39).

3. Procédé selon les revendications 1 ou 2 **caractérisé en ce**
**Que**, lors de la création de la section de transition (61), la quantité de produit en fusion apportée pour le tuyau interne (39) par unité de temps est augmentée.
